# EUROPEAN PATENT APPLICATION

(11) **EP 0 970 868 A1**
(43) Date of publication of application: **12.01.2000**
(21) Application number: 97907399.6
(22) Date of filing: 19.03.1997
(51) Int. Cl.: B61L 23/14, H04Q 9/00, H04L 13/00, H04J 13/00

(54) **METHOD AND SYSTEM FOR CONTROLLING TRAIN BY RADIO**

(71) Applicant: Hitachi, Ltd., Chiyoda-ku, Tokyo 101 (JP)
(72) Inventor: YOKOSUKA, Yasushi, Hitachinaka-shi, Ibaraki 312 (JP); MAEKAWA, Keiji, Hitachi-shi, Ibaraki 316 (JP); KAWABATA, Atsushi, Hitachi-shi, Ibaraki 319-12 (JP); FUJIWARA, Michio, Hitachinaka-shi, Ibaraki 312 (JP)
(74) Representative: Strehl Schübel-Hopf & Partner
(86) International application number: JP9700916
(87) International publication number: WO9841435

(57) **Abstract**

A radio communication system for controlling train which can recognize the state of the transmission line of radio communication and easily discriminate equipment faults by utilizing the synchronous state of spread-spectrum communication by perceiving the synchronizing technique of the spread-spectrum communication. In addition, a system which uses controls signals of a plurality of cryptographic systems for ordinary communication and unified signals for emergency communication by providing a plurality of enciphered keys and emergency codes for emergency communication for ground stations and on-vehicle stations and obtaining agreement between transmission and reception by using protocol signals. Moreover, system control system which can delete a train after operation from objects to be controlled with a high degree of security by using a dynamic ID code which is given when a train registering protocol is implemented.

## Description

### BACKGROUND OF THE INVENTION

Present invention relates to a method for transmitting a control information to a train by a radio communication system in order to operate the train safely on the railroad.

In order to secure safe service of the train on the railroad, the rail is used as a track circuit, and detection of the track circuit is performed generally. However, as this track circuit cuts off the rail electrically and equipments are established between the track circuits, there arise a defect as that cost of the equipment and the maintenance become high.

In such a background, a radio communication train control system is examined for detecting position of the train without the track circuit and for transmitting control information to the train for securing safety thereof.

The technology to transmit information of driving condition to the train by utilizing the radio communication system is disclosed in Japanese Patent Laid-open No. 64-69129 bulletin and "railroad and electricity technology" 1995.2. Vol. 6. No. 2. pages 3 to 9 "Operation control system in the next generation (CARAT), wherein structure and transmission system of ?I interval control are disclosed.
However, as for the train control with radio system, there are the following problems.
(1) Instant stoppage of the signal by condition failure on the propagation path,
(2) Communication stoppage by a disturbing wave,
(3) Error control by a mischief signal, and
(4) Oversight of the train which should be controlled.

Sufficient reliability cannot be secured about countermeasures of these problems in the conventional system.
That is, in the train control method utilizing the radio system, communication condition and equipment abnormality need to be judged in high reliability and surely, however it is not considered fully in the prior art.

In the train control method utilizing the radio communication system furthermore, a disturbance signal for the train, a signal for deleting existence of the train, an emergency stopping signal and wiretapping etc. needs to be expelled effectively, however they are not considered fully too in the prior art.

Moreover in Japanese Patent Laid-open No. 8-183453 bulletin, utilizing spectrum diffuse transmission communication method in train detection with the track circuit, improvement method of an anti-noise characteristic is indicated. However in this prior art, the spectrum diffuse transmission communication method is not utilized in the radio communication of the train control. Moreover, it is not mentioned at all how to solve the special problems of the train control stated above by the radio communication.

### SUMMARY OF THE INVENTION

An object of present invention is to offer a train control method which effectively utilizes a radio communication system being superior in noise and fading peculiar to the radio communication, may control a suitable operation according to the communication channel conditions, and has a high reliability of the equipment.

An another object of present invention is to offer a train control method which is tough for intentional communication disturbance, and performs an information communication keeping a high concealment between a base station on the ground and the train.

In order to achieve the above object in the present invention, in a train control method to control the train with an information signal by which the radio base station on the ground is contacted with a radio mobile station carried by the train, the spectrum diffuse transmission communication is performed between the radio base station and the radio mobile station, and in at least one of the radio base station and the radio mobile station, a reception signal electric power of a radio band, a signal electric power after processing of back-diffusion which synchronizes to a spectrum diffusion pattern, and a frame error pattern detected when the reception signal is changed into a frame, are inputted so as to judge whether a radio communication trouble or a radio equipment fault.

That is, in the present invention, paying attention to a synchronism technology of the spectrum diffusion communication, a signal failure occurred by disturbance of short noise etc. or a serious equipment fault is judged to be occurred. Thereby, the most suitable driving indication matched with the channel conditions is performed and a communication system to be able to easily judge the equipment fault may be offered.

In order to achieve the above another object in the present invention, plural encipherment means about the contact mentioned above in each of the radio base station and the radio mobile station are prepared, when the radio mobile station built on the train is started up and a hand-over processing to change the radio base station where radio mobile station communicates is performed, a protocol communication to coinside cryptogram system between the radio mobile station and the radio base station is executed.

As a system to improve the concealment of the telegraphic message itself, in a transmission of one telegraphic message, it is desirable that one encipherment system is not used, but a telegraphic message that corded with plural signaling keys are divided and integrated in suitable.

Moreover plural cryptogram signaling keys are desirable to be managed on the train which is closed so as to control the train itself than to be managed with the ground apparatus which must control the plural train.

Moreover, an urgent information such as an emergency stopping order of the train should be communicated to each train immediately, when the cryptogram signaling keys is set up fixedly, there arises a defect for it to become weak to an intentional disturbance.

On this account, in the present invention, when the radio mobile station mounted on the train is started up or the hand-over processing to change the radio base station where the radio mobile station communicates is taken place, a cryptanalysis code of the urgent code is communicated to the radio mobile station from the radio base station.

Moreover, when the train which is registered with, becomes not to be a controlled object, absolute reliability becomes necessary because of safe service. For example, when any disturbance is given by a signal obtained by taping a past communication result, a registration ID is given from the base station side in being registered or hand-over processing in the present invention, said given identification is checked, and it is inspected whether it is the train which should let become extinct or not so as to reject the disturbance.

By a characteristic of above-mentioned present invention, the communication channel conditions can be judged precisely, it is tough in the intentional disturbance from an outsider, a communication system that has higher confidence may be built up.

### BRIEF DESCRIPTION OF THE DRAWINGS

Figure 1 is a block diagram showing a construction of one embodiment of a radio mobile station utilizing the present invention.
Figure 2 is a shematic view of a total system which the present invention is applied.
Figure 3 is a block diagram relating to a communication condition judgment.
Figure 4 is a view for showing a construction of an encipherment part.
Figure 5 is a view for showing a basic protocol in driving start.
Figure 6 is a view for showing the basic protocol in closing a train driving.
Figure 7 is a view for showing the basic protocol in hand-over processing.
Figure 8 is a view for explaining generation of the transmission cryptogram information.
Figure 9 is a view for showing a construction of the decryption part.
Figure 10 is a view for explaining decipherment of a reception cryptogram information.
Figure 11 is a view for representing a condition of the system in an urgent code communication.
Figure 12 is a bock diagram for showing the construction of one embodiment of the radio base station utilizing the present invention.
Figure 13 a processing flow chart representing an operation control judgment processing.

### DETAILED DESCRIPTION OF THE PREFERRED EMBODIMENT

Embodiment of present invention will be explained using drawings as follows.

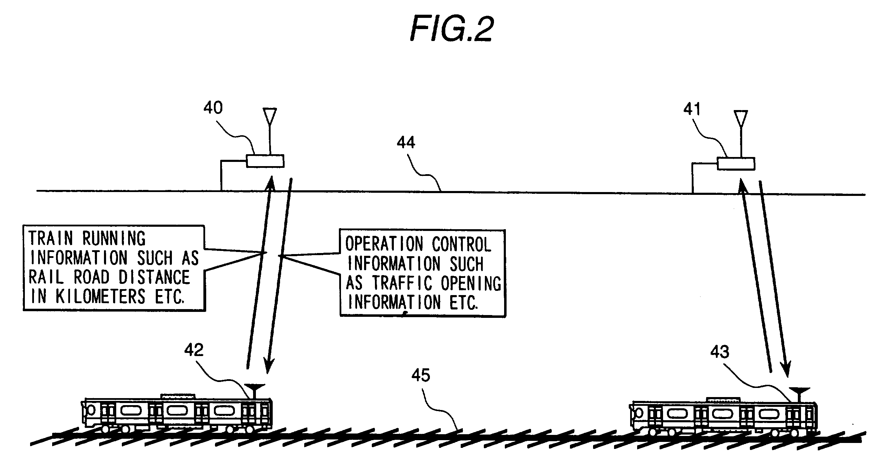

At first, in figure 2, an example of total system of the present invention is shown.

In a radio signal system, as shown in figure 2, a train position detected on the train is transmitted to the base station on the ground by a radio signal, and in the base station on the ground the upper part, an objective spot where the train can move safely is obtained and is transmitted to the train. The train received the signal of the objective spot, and is controlled to be able to move and stop safely by the objective spot. As the objective spot moves to front too according to progress of the train, it becomes possible for the train to advance without any trouble so long as the train does not come close to a front train.

Hereinafter, a terminal device on the train installing a radio communication equipment is called as "mobile station" and a terminal installing a radio equipment on the ground in order to communicate with the train is called "base station".
In this embodiment, in several km along the rail road, plural base stations are arranged, and all of the rail road are covered by them. Every mobile stations are designed to be arranged within a radio arrival range of either of the base stations.

When the mobile station approaches boundary of the base stations, "hand-over processing" is taken place so as to transfer the mobile station to the next base station. In this way, the mobile station is transferred through the base stations one after another.

The mobile station always communicates with the base station while wandering about in the base station in sequence. When a communication stops more than a certain predetermined time, an emergency braking is triggered.

Using figure 2, it will be explained in detail as follows.
In a system shown in figure 2, the information of the train such as a position of the train on the rail road, train velocity, train number etc. detected by the train on a railroad track 45, is transmitted from the mobile station 42 or 43 to the base station 40 or 41.

The position of the train is detected by the train itself, and as a technique to detect the position of the train, a technique to obtain it by GPS or a velocity electric generator and a transit time is used. In the base station 40, 41, the information is exchanged through network 44 between the adjacency base stations on the basis of train running information transmitted from the train, and the operation control information such as an appropriate velocity indication or a traffic distance in kilometers opening to the course is transmitted to the mobile station 42 or 43
on the train as a controlled object. That is, the train running information and the operation control information are to be communicated through the radio system.

The base stations 40, 41 are provided in every several km along a rail road by establishing a radio antenna on a pole for a stringing for example, Arrival range of the radio communication is established so as to overlap with the next base station on the railroad track 45.

The mobile station is established at least one by one train, at least one receiving antenna is established on a covering top of the train.

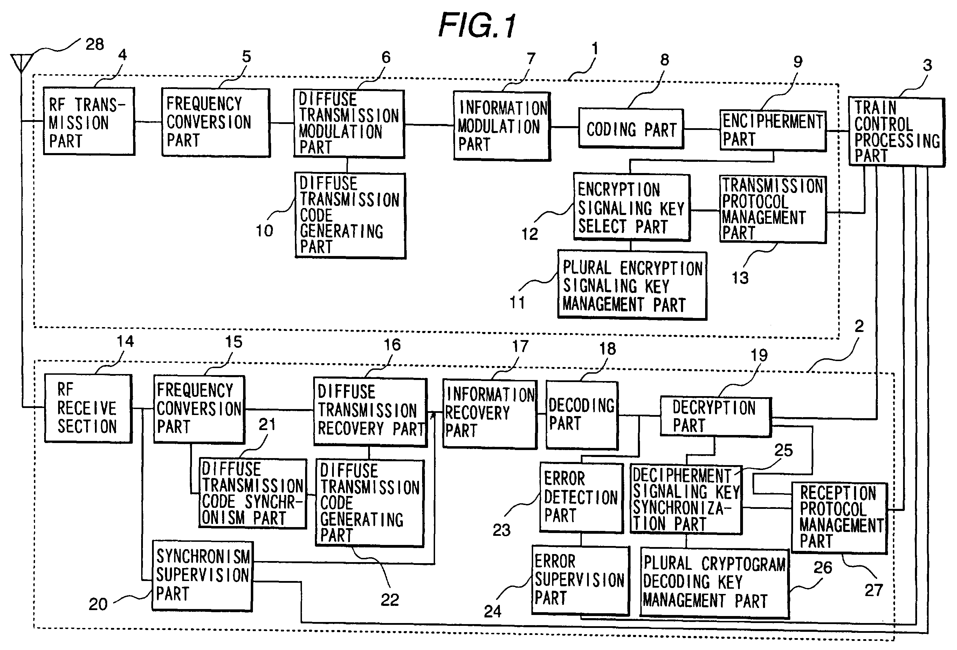

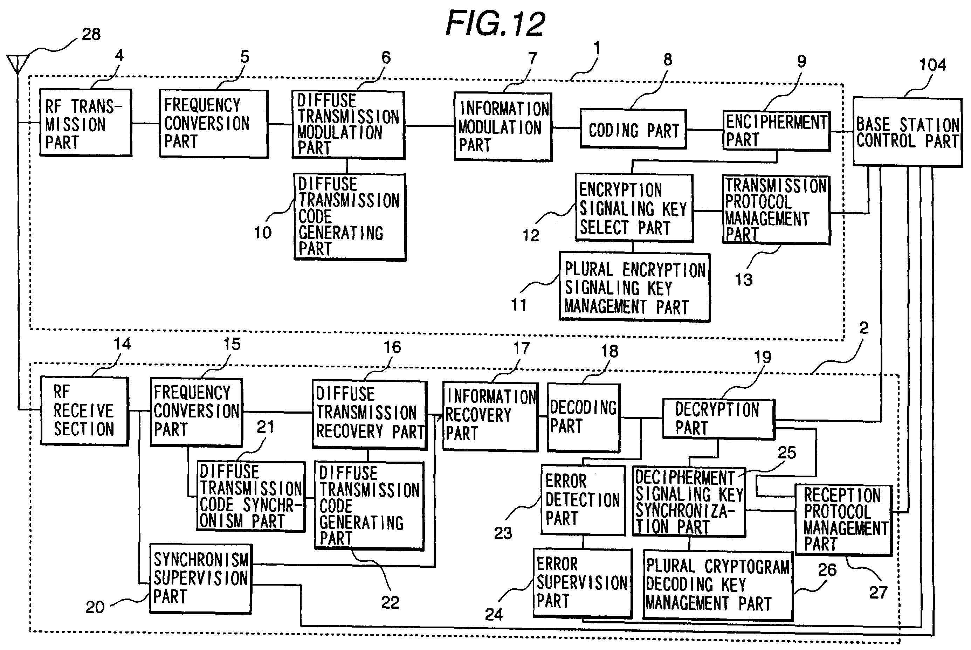

An example of construction of the mobile station is shown in figure 1 in the next. As the mobile station has an equal construction almost with a construction of the base station shown by figure 12 relating to a train communication control, a difference with the mobile station about the base station function will be explained later, and a construction of the mobile station is explain here.

Figure 1 is a block diagram representing one embodiment of the mobile station communications equipment and the train control apparatus in the present invention.

In the system of the present invention, a spectrum diffuse transmission communication method which is tough in electromagnetic noise and fading essentially in a radio communication system, is utilized.

As shown in a transmission part 1, a signal from an information modulation part 7 is diffused to be a spectrum at a diffuse transmission modulation part 6 by a diffuse
transmission code generating part 10, and is converted into a radio frequency (RF) band at a frequency conversion part 5, is adjusted an electric power thereof at RF transmission part 4 adequately, and is transmitted through a radio antenna 28.

The construction of the transmission part which utilizes said spectrum diffuse transmission communication method is that of a direct diffuse transmission system used generally. Utilizing said spectrum diffuse transmission communication method, the information necessary for the train service control is communicated. As the spectrum diffuse transmission communication, there is a frequency hopping system in addition to the direct diffuse transmission system, and the frequency hopping system may be adopted.

In the case that the communications equipment is constituted by the construction as shown in figure 1, in order to achieve a function mentioned later, an coding part 8, an encipherment part 9, a cryptogram signaling key select part 12, a transmission protocol management part 13, and a plural cryptogram signaling key management part 11 are constituting a part having many treatment variations than hardware components such as gating array, and the one realized with a soft processing by using a microprocessor is advantageous in cost and easiness to construct. However, it is clear that it may be realized even if the hardware is used, and it is not limitted to the software processing. An information modulation part 7, a diffuse transmission modulation part 6, a diffuse transmission code generating part 10, and a frequency conversion part 5 are suited to a processing used the hardware, because the processing is fixed to the serial sequence, and the frequency becomes high comparatively and it is suitable for the hardware processing of the gating array rather than the soft processing, too. A RF transmission part 4 is that for emission of radio wave, and it is realized with an analog hardware. In any case, the parts shown by reference numerals 4-7 and 10 are realized a transmitter utilized
generally as a function of a SS transmitter.

In the same way in the construction of the receiving side too, a RF receive section 14, a frequency conversion part 15, a diffuse transmission recovery part 16, an information recovery part 17, a diffuse transmission code synchronism part 21, a diffused transmission code generating part 22 may be constituted with a hardware generally, and function of the SS transmitter realized generally may be utilized.

A decoding part 18, a decryption part 19, a synchronism supervision part 20, an error detection part 23, an error supervision part 24, a decipherment signaling key synchronization part 25, plural cryptogram decoding key management part 26, and a reception protocol management part 27 are suited for the software processing construction by a microprocessor. However, it is clear that it may be realized even if the hardware is used as stated above, and it is not limited to the software processing.

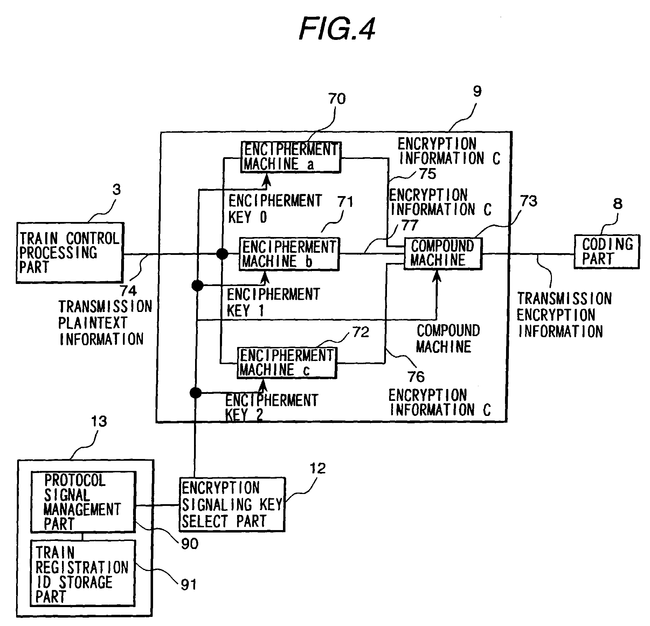

The information that should be transmitted is formed by the train control processing part 3, and it is input into the encipherment part 9 to be characterized in the present invention. The train must report the position of the rail road, the speed etc. to the base station side as shown in figure 2. Although not shown by a diagram in figure 1, informations of the position and from the velocity detection device are inputted to the encipherment part 9 so as to be coded as the encryption through the train control processing part 3. The encipherment system will be explained using figure 4 in detail later, and only a brief description thereof is explained simply here.

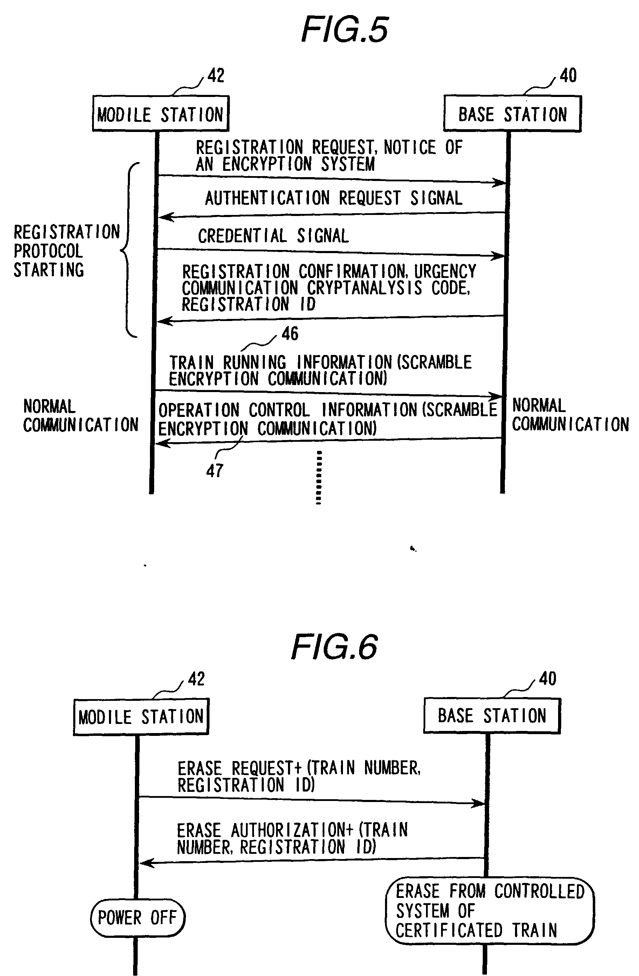

The encryption in the receiving side must coinside with that in the transmitting side. In order to let the both functions in the transmitting side and in the receiving
side coinside, a transmission protocol management part 13 is arranged. An example of the transmission protocol will be explained by using figures 5 to figure 7 in detail.

Main function of said transmission protocol management part 13 is to form a signal for communication settlement in order to have at first assign a communication channel from the base station that should communicate, or is to execute the control function such as generation of the protocol signal or a selection of the encipherment system in order to coincide the encipherment system. That is to say, when the train is registered in the base station side, or it is informed from the train control processing part 3 to the transmission protocol management part 13 that the spot to renew the base station to be communicated has come, the protocol signal is generated as explained by figure 5 to figure 7 and an answer is transmitted to the train control processing part 3. When the encipherment system is decided to the protocol signal furthermore, an encipherment system in an area that the train resides is transmitted to the cryptogram signaling key select part 12. With the encipherment system selected through said protocol, the information signal which should be transmitted is converted into the encryption in the encipherment part 9. However in present invention, not only one encipherment system but plural encipherment systems are characterized to
be supported, and a system that was decided through the protocol signal in the encryption signaling key select part 12 is notified to the plural encryption signaling key select part 11, and is selected out of the plural encryption signaling key management part 11 so as to be used.

During a usual control data communication, the concealment thereof is improved by using plural encryption systems in this way, and the encryption system may be dynamically by using the protocol signal being characteristic of the present invention under the train control processing part 3, and the trains are communicated with their different combinations respectively. Therefore, the concealment of the radio communication can be raised in comparison with a fixed encipherment system.

Moreover as a characteristic of the transmission protocol management part 13, it has a function to accumulate an ID code served from a radio base station control side in a registration protocol communication to the base station side of the train as explained a functional using figure 5 in detail later. When service of the train is finished, and power source therefore is cut off, and the train is moved to other train control system, a protocol is supported so as to send not only the train number determined fixedly but a specific ID code registered at first, to the base station
side. It will be described using figure 5 in detail.

In a coding part 8, after being converted into a code decided by the radio communication and being modulated in a information modulation part 7, a spectrum diffuse transmission modulation processing is enforced. Although it is known that there is an information concealment function in the spectrum diffuse transmission communication itself,
the diffuse transmission modulation part 6 to RF transmission part 4 are constructed with an analog hardware component such as a digital integrated circuit and a power amplifier as described already To realize the concealment function in an application, it needs to be encrypted before the diffusion, and an original concealment function is easily realized for the end user by using the protocol communication in this
system.

When the mobile station established by the train to move to is operated as the transmitting side, the receiving side becomes the base stations 40 and 41 shown in figure 2. However, because a transmitter in the base station and the mobile
station equips with a transmitter receiver ability, a receiver ability will be explained by using a block diagram of the mobile station shown in figure 1 here.

A reception operation is started by receiving a message of the radio signal transmitted through the radio antenna 28. RF signal received a message receives an appropriate
filtering or a level adjustment by a RF receive section 14.

Frequency bandwidth of the signal is converted into the frequency bandwidth that is easy to take synchronism of diffuse transmission code by a frequency conversion part 15, and an information modulated wave before being transmitted is reproduced with a diffuse transmission recovery part 16. In order to reproduce the modulation information wave by the diffuse transmission recovery part 16, the diffuse transmission signal in the modulation transmitting side needs to be synchronized precisely with the code pattern for the
diffuse transmission recovery . The diffuse transmission code synchronism part 21 and the diffuse transmission code generating part 22 are provided for that purpose.

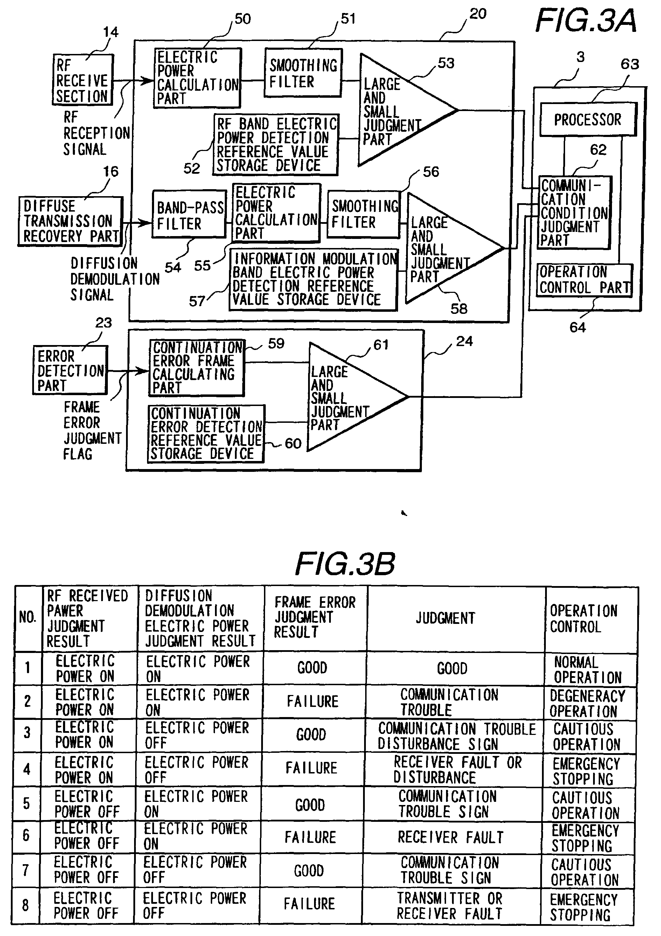

In a synchronism supervision part 20, a synchronism condition of the diffuse transmission code is watched, and when out of synchronism occurred, a repeat of an initial level luffing motion is ordered, and the supervision result is output
furthermore to the train control processing part 3, it is utilized in a detection of apparatus abnormality and fault of the device in the transmitting side with the output from an error supervision part 24 mentioned later. Said function will be explained using figure 3 in detail later.

Back-diffused signal of gas is input into the information recovery part 17. The information signal being demodulated is re-constructed surely relating to only the information signal from a signal framed with a format of a high level data link control (HDLC) system with a decoding part 18 Decoding is surely performed with a signal processing system decided with the transmitting side by returning signal coded differentially into an original information, or by detecting error.

Because, in this embodiment, the communication error pattern needs to be observed in the receiving side, the error detection with a format of HDLC is indispensable.

The present system is a system used generally too, by a local area network (LAN) communication and a facsimile equipment communication. The present system is based on these system so as to perform the error detection. This error detection is executed by the error detection part 23, and watches the error conditions with an error supervision part 24. The output is output to the train control processing part 3, and is utilized to detect an apparatus abnormality in the transmitting side and a fault detection of the device with the output from the synchronism supervision part for the spectrum diffuse demodulation.

Signal decoded without any error is transferred to a decryption part 19 and is converted into a plaintext signal. As It has been described in the explanation of the function
in the transmitting side,the present invention uses plural encipherment systems.

Therefore, the decoding signaling key is selected from the plural encryption decoding signaling key management part 26, the decoding signaling key is surely synchronized
with the decoding signaling key synchronization part 25, and it is converted the into plaintext information with the decryption part 19 so as to be output into the train control processing part 3. In order to perform management of protocol signal for setting so as to coincide the encipherment system or management of the communication channel with the base station that should be communicated, a reception protocol
management part 27 is arranged. A cryptanalysis processing is to be executed in the decryption part 19 with an encipherment system selected through said protocol.

Moreover, although the function of the reception protocol management part 27 will be explained using figure 5 in detail later. The system of the ground station side performs management of the code used when at once communicating to the each train to be controlled in emergency. In a communication of usual control data, the encipherment systems are respectively different according to the every trains, and when the data are to be carried away from the base station side all at once, the signal which can be recognized commonly needs to be set up. The common signal for said emergency is set up in the base station side, if this emergency signal is fixed, it becomes easy for the intensional disturbance person to be interfered. In order to make this danger small, in a start-up protocol signal, a cryptanalysis code to decode the urgent information in dynamic from the base station side is set up too. Naturally when performing the hand-over so as to be in a communication area of an adjacency radio base station, an urgent information code cryptanalysis signaling
key of a next area is to be received through hand exaggerated protocol. In this way, the code cryptanalysis signaling key information for the urgent signal communication is mounted on only in the first protocol signal which the train is
registered to the communication area. Thereby, danger to leak the information becomes small to the utmost.

In the registration of the train furthermore, the registration can be confirmed to be right by exchanging each other's password that are general technique so as to take each other's authentication. However under a special condition of the train, cutting apart of the control must be paied attention the most carefully. Even if the train exists, if it is assumed that the train does not exist in the base station side and the train has been controlled, it has become a control in the dangerous side. Therefore, a certain technique as that the train cannot be separated by the disturbance, is demanded. Because the concealment of the information is planned for a scramble of the encryption to designate in dynamic in the train side in the present invention, there is not the disturbance to be pretended. However as the highest preservation degree is demanded relating to erase of the ID in the train control system, a peculiar characteristic ID for the train from the base station side is given in the registration, and the erase of the ID is decided not to be
admitted, if there is not coincidence of said ID in addition to the train number in the erase. Acquisition of the ID appointed by the radio base station is a function of the reception protocol management part 27. The acquired ID is handed to the transmission protocol management part 13 by way of the train control processing part 3, and is held to be managed here, till the service of the train is finished,
an erase request is sent from the train side, and a delete processing from the controlled system is completed in the base station side. Relating to the registration of train,
the hand-over and the erase protocol from the controlled system, they will be explained using figure 5, figure 6 and figure 7 in detail later.

Figure 3 is explained in detail next.

In figure 3, the synchronism supervision part 20, the error supervision part 24 and the train control processing part 3 are shown in detail about the function part for judging aggravation and transmitter fault of the communication channel surely.

A block construction is shown in figure 3 (1). Check signals in order to judge are a RF reception signal which is output of the RF receive section 14, a diffuse demodulation signal which is output of the diffuse demodulation part 16, and a frame error judgment flag which is output of the error detection part 23. Signal processing of the above three check signals will be explained using block diagram.

The RF reception signal is obtained as an electric power in RF band in the electric power calculation part 50. Because, as the radio signal is drifted in large instantaneously by an affection such as an electromagnetic noise or a fading, it is compared with a reference value of the RF band electric power detection reference value storage device 52 through a smoothing filter 51 next for a stable electric power detection. A result compared with a large and small judgment part 53 is judged as that there is or there is not a RF received power so as to be input into a communication condition judgment part 62 in the train control apparatus 3. A processing by the communication condition judgment processing part 62 is executed according to a judgment list as shown in figure 3 (2). After description of other check signal, said list will be explained.

The diffuse demodulation signal is a signal which is converted into a narrow band signal by the back-diffusion, and the signal of an unnecessary band is suppressed
by a band-pass filter (BPF) 54 in the beginning so as to calculate it with an electric power calculation part 55 by picking out only an electric power of this narrow band signal When a desired modulated wave is not received or the back-diffusion does not synchronize with a phase of the transmitting side, as the electric power does not converge in the passband of the BPF and is diffused to the broad band, the electric power after passed the BPF is kept to be small. That is to say, it can be judged whether the desired reception wave has arrived or not by watching this electric power. Because being the radio communication however, the instant drift cannot be avoided in the same as the electric power supervision of the RF band, it is compared with the reference value of the information modulation band electric power detection reference value storage device 57 after passing through the smoothing filter 56.

The result compared by the large and small judgment part 58 is input into the communication condition judgment part 62 in the train control apparatus 3 in the same as the output of the large and small judgment part 53 in a preceding stage.
The frame error judgment flag is input into a continuation error frame calculating part 59 in the error supervision part 24. How many frames being wrong in succession is caluculated here. Error detection may be performed by detecting a sequence to check the error of HDLC framing with error detection part 23. The flag obtained as this detection result is checked regularly, if there is error, the continuation error counter is increased with 1, and if there is not the error, the counter is reset to be zero. This calculated value is compared with the reference value of the continuation error detection reference value storage device 60 set up beforehand by the large and small judgment part 61. The compared result is input into the communication condition judgment part 62 in the train control apparatus 3 in the same as the output of the above-mentioned large and small judgment part 58.

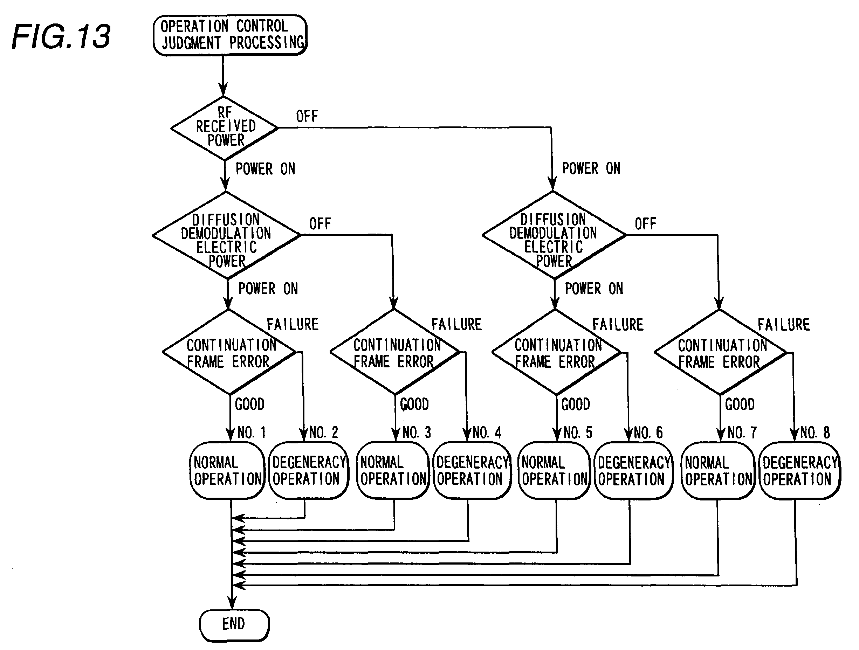

Inner processing of the communication judgment processing part 62 will be explained using figure 3 (2) and figure 13.

In the communication using the usual frequency modulation system or the angle modulation system, the electric power in the communication band is treated as a ground of the demodulation, and as using the spectrum diffusion communication method, the check signal explained in figure 3 (1) increases and the condition of the radio communication channel and the condition of the transmitter device may be judged more precisely as shown in a judgment column of the list of figure 3 (2). In No. 1 of figure 3 (2), the electric wave condition is good and the continuation error does not occur too, there is not any incident for the train service. However, there is a possibility to appear a sudden single error. When said sudden single error is wanted as an information, the frame error judgment flag is input into the direct communication condition judgment part 62 so as to inform the drivers. In No. 2 of figure 3 (2), the diffusion synchronism is performed too and the electric power in the RF band is detected, however only the data are wrong in succession. From
this reason, it is judged as that the communication trouble that the noise mixes in more than an allowed value. In No. 3 of figure 3 (2), the RF electric power is observed but the continuation frame error is not detected yet, and the synchronism difference is regarded to occur and the communication trouble and a sign of the disturbance are judged to be. In No. 3 of figure 3 (2), as the synchronism of the diffusion code is not obtained and the error occurs in succession too, it may be judged to receive a message of the receiver fault or the disturbing wave. In No. 5 of figure 3 (2), as the electric power of the RF band is disappeared, but others are good, the fading and the trouble by the transmitter abnormality may be taken as an occurring sign. In No. 6 of figure 3 (2), the diffusion demodulation is judged
to be locked to the abnormal signal which occurred in the receiver, and it is taken as the receiver fault. In No. 7 of figure 3 (2), as it is judged in a transient state which the reception wave will disappear gradually, it is judged to be a sign of the communication trouble generation. In No. 8 of figure 3 (2), as any normal function does not work at all at the time when a reception wave should be received,
it is taken as a fault of the transmitter or the receiver . Naturally when there is not the arrival of the reception wave, the equipment abnormality is excluded naturally. As being judged like the list of figure 3 (2), it can be judged easily
whether it is the communication trouble or the equipment abnormal too.

Further, as a signal processing technique, the list shown in figure 3 (2) may be accumulated as data in a storage device, a list search processing may be performed, and it is easy to judge with a micro program to be built in the processor 63.

As shown in the list of figure 3 (2) after judging the communication condition, a normal driving, a degeneracy driving, a cautious running, and an emergency stopping
control are executed by the processor 63. When it is judged to be the equipment abnormality of the transmitter or the receiver, In order to secure the security of the service of other train, and the security of the train itself, it is done
with emergency stopping control.

Figure 13 shows the judgment processing which mentioned above with a flow chart.

Number attached to a right handside of each item of the judgment processing result in the figure, respectively corresponds to No. of the judgment list of figure 3(2). This processing can be judged easily by letting the microprocessors do software processing.

As for the processor 63, the processings to perform with operation control part 64 execute various processings as other control in addition to the communication condition judgment. For example, the train position is detected from a product of the velocity electric generator with the time, and the braking is controlled according to the operation control information 47 received and various informations are indicated to driver's stand. Especially, on processing part achieving this function, it is not shown by a diagram finely.
In the next using figure 4 and others, a point to make the concealment of the communication in the present invention and the security technology of the reliability in driving the train will be explained.

In figure 4 to figure 8, points relating to an encryption communication method having a high concealment and an enhancement system of a preservation degree for chasing
the train using the communication protocol in the present invention, are shown.

Detail of the coding part 9 is shown in figure 4. The transmission plaintext information 74 that is an output of the train control processing part 3 is input into the coding
part 9, and in the coding part 9, according to the output of the encryption signaling key select part 12, a coding machine a70 with a coding key 0 arranged in the receiving side, a coding key 2 with a coding key 1, a coding machine c72 with coding machine b71, are operated to encrypt it.

A decision between the transmitting side and the receiving siderelating to the encipherment system will be explained using figure 5 later.

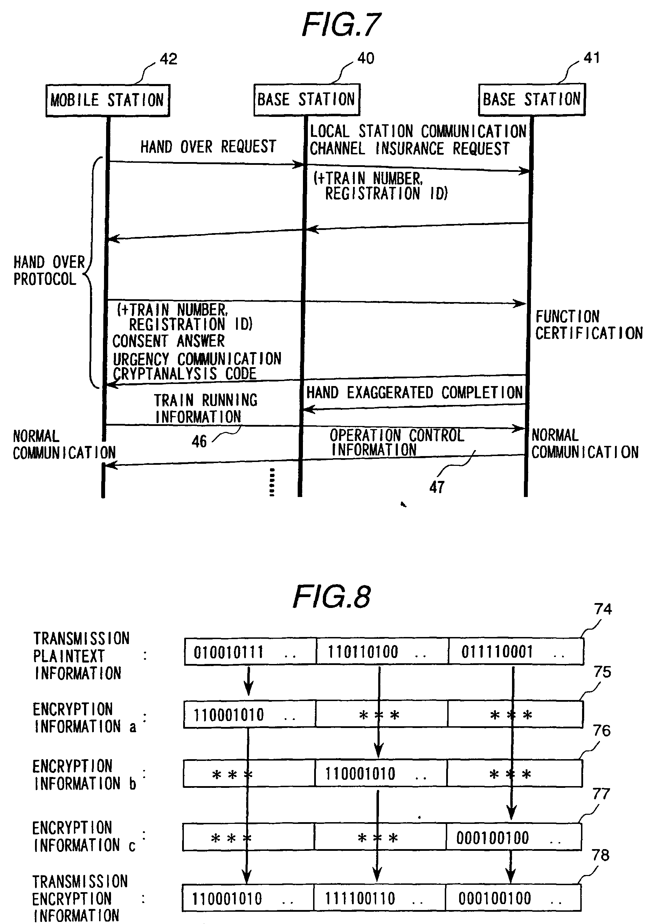

The encipherment processing performed by the encipherment machine is performed by changing seeds of the encryption in DES (Data Encryption Standerd) system that is
an encipherment system well-known generally, or is used a method for the user to originally utilize polynomial operation in order to exchange bit. These are output the plaintext informations 74 independently as encryption informations shown in figure 8, that is, as a bit stream encryption information a75 which is the output of the coding machine a70, as a bit stream encryption information b76 which is the
output of coding machine b71, and as a bit stream encryption information c77 which is the output of coding machine c72. Respective outputs are cut partially and are composed as shown in figure 8 by a compound machine 73 according to a compound key still decided between the transmission side and the reception side. The output of said compound machine 73 is output as a transmission encryption information 78 by coding part 8. The composed transmission encryption information 78 is enciphered with three separated encipherment systems and is composed a part in arbitrary overall length decided by the protocol signal, so that the encryption signal which is greatly improved tolerance for the cryptanalysis, is to be transmitted a message.

Here, a case having three coding machines is shown, however the number of the coding machine is not limitted to three, and there is not constraint to the number. The appropriate number of the coding machine may be set up based on the constraint on signal processing performance of the processor to be used for the control and the requested cost. Moreover every output needs not to be always used, the concealment can be secured if some output is not used. That is to say, case list element increases in configuration of the encipherment machine, thereby the difficulty for the
disturbance person increases as a result. Further, the patterns 0,1 of each signal as shown in figure 8, are shown for description formally and are not patterns with any special denotation. Moreover asterisk (*) merely shows encryption information that is not used.

A system enhancing preservation degree in train tracking will be explained in the next. The most important thing on the preservation is that every train position is grasped with accuracy by the base station side without any exception. Each train which is controlled by the system in the present invention must be gone through a procedure under a normal rule according to a protocol decided by a communication with the base station.

Figure 5 shows sending and receiving of a basic protocol signal in a driving start.

The time moves to a downward direction under each station, and the informations shown by arrows are delivered between the stations. At first, when starting driving of the train, a registration request to start the driving to the base station side apparatus and a notice of the encipherment system in a normal communication which is a characteristic of the present invention as stated above, are output by the train as the mobile station side based on an indication from the transmission protocol management part 13 shown by figure 1 through a radio antenna 28. In order to expel registration request by mischief in the next, the base station side outputs an authentication request signal. If a credential signal transmitted under management of the transmission protocol management part 13 in the mobile station side, accords with an expected value, the approvance of the registration, and the cryptanalysis code of urgency communication and the registration ID to be different every registration are transmitted by the base station side, and the registration protocol is finished.

These protocol signal transmitted a message from the base station side further is formed and is output based on the indication from the transmission protocol management part 101 of the base station side which will be explained using figure 12 later.

If a concealment is going to be raised about the communication protocol in an initial registration, an encipherment system of a default may be used by the system, and it becomes possibleto raise the concealment furthermore, if the encipherment system by a default is decided to be changed by time and date.

In the mobile station side which received a message of registration ID, a registration ID is stored in a train registration ID storage part 91 managed by the protocol
signal management part 90 as a function of the transmission protocol management part 13 shown in figure 4.

Figure 6 shows sending and receiving of the basic protocol signal when closing to drive the train . When closing to drive the train as shown in figure 6, the stored ID is added as a further guarantee to prove oneself, with the train number allocated fixedly to an erase request protocol signal for excluding the train from the controlled object by a reference from the protocol signal management part 90. The base station side apparatus receiving a message of said erase request protocol signal judges the protocol signal by the reception protocol management part 103 as shown by figure
12, and sends out the erase permission signal as shown in figure 6 by the indication from the transmission protocol signal management part 101. The registration ID mentioned above is alloted dynamically by the base station side in stating the train draiving, and even if the disturbance person tryes to be moved away from the registration, it is almost impossibe to know the ID alloted into said train number and there is not any possibility to be interfered, and the train is finished to be driven by high preservation degree. As mentioned later further, the registration ID may be used one which is given from the base station to the mobile station in the handover. In this case, as the registration ID to use in requesting the erase, all registration ID given to the mobile station during driving the train may be used.

Figure 7 shows a basic protocol used when the mobile station changes the base station to be communicated, that is, when the hand over is processed. By an example shown to figure 2, train 42 moves right, and a case to change communication base station is shown from base station 40 in base station 41. If whole area of the system can be covered by one radio base station, the hand over is not a processing which is indispensable in the system configuration. However,in the system that a communication zone is divided and channel is used repeatedly, the control area can be enlarged
efficiently, a system of cellular phones is used from a viewpoint of utilization of radio electric wave resources. This operation to perform zone transition while communicating means the hand over processing.

When the mobile station 42 on the train comes to the hand over region, the hand over protocol is activated by the indication from the transmission protocol management part 13 as shown in figure 1, and outputs the hand over request to the base station 40 while communicating. The base station 40 that received the hand over request, informs that the train loaded the mobile station 42 comes in the communication region
of the base station 41 being the base station to be next thereto through the communication lines connected by wire or wireless with the base station in mutual as shown in figure 2 using the train number and the registration ID, and outputs a communication channel security request. The base station 41 having received said request secures the channel and notifies said channel to the base station 40. The construction about the mutual communication of the base stations is not shown by the figure, the information of the mutual communication is delivered between the base stations under the control by the base station controller 104 in the base station
40, 41 as shown in figure 12. In the base station 40, when the base station controller 104 recognizes that communication channel is able to be secured by the base station 41, the mobile station 42 on the train is notified by the control of the transmission protocol management part 101.
In the train being a receiving side successively, when it is detected to be received a message of an answer back in the reception protocol management part 27 in the communications equipment of the mobile station side as shown in figure 1, the encipherment system and the train number and the registration ID are transmitted by activating the transmission protocol management part 13. In the base station
side, the train number in the signal which has been transmitted thereto and the registration thereof are verified by using the train number and the registration ID notified to base station 41 of by a communication between the base stations alreadat the reception protocol management part 103 shown in figure 12, and the urgency communication cryptanalysis code is transmitted to the mobile station by identifying
the coincidence thereof. Furthermore, the base station 41 notifies the hand over having been completed to the base station 40 before the train resides on the rail road based on the control of the base station controller 104 of the figure 12 after the train identifies to be handed over to it's zone with the protocol stated above, and the sending and the receiving of hand over protocol signal finishes.

Moreover while the hand over is taken place, the base station may give the registration ID to the mobile station newly in the same way as the registration time as stated
above.

In this way when a zone transition is necessary, a processing for removing the disturbance person pretended to be the train so as to register itself, by communicating the train number and the registration ID, is built in. In this way in the base station transition, the encipherment system to be used, is notified from the mobile station to the former base station to be transmitted the zone, the encipherment system can be set up in dynamic, the encipherment system can be changed every hand over, and the concealment becomes high. Furthermore, the urgency communication cryptanalysis code becomes little danger interfered by mischief, as the urgency communicatio cryptanalysis code which every base station apparatus can set up voluntarily is handed and this code is to be changed in dynamic, too.

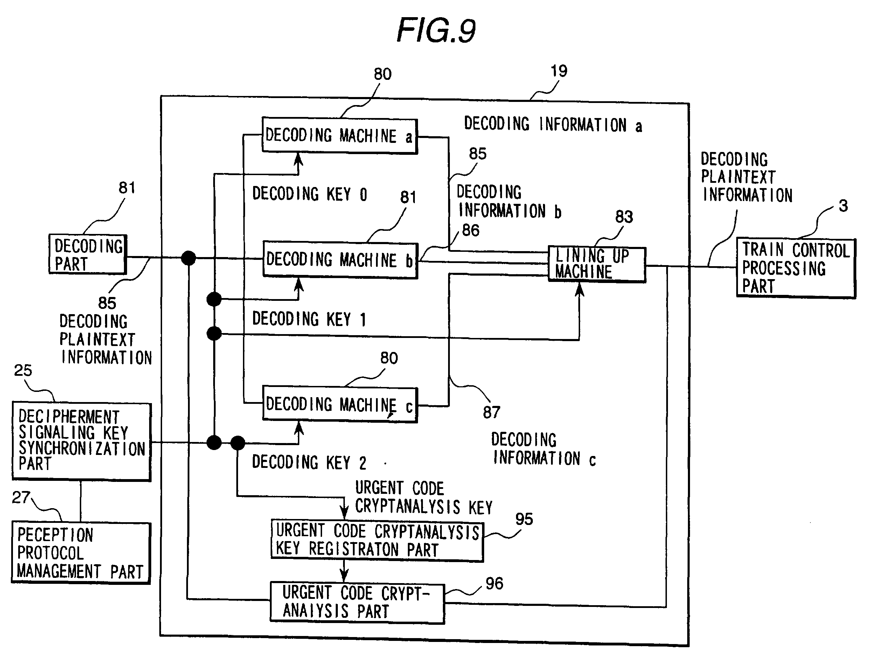

Figure 9 shows a block construction of a decoding machine to do decoding of the enciphermed signal.

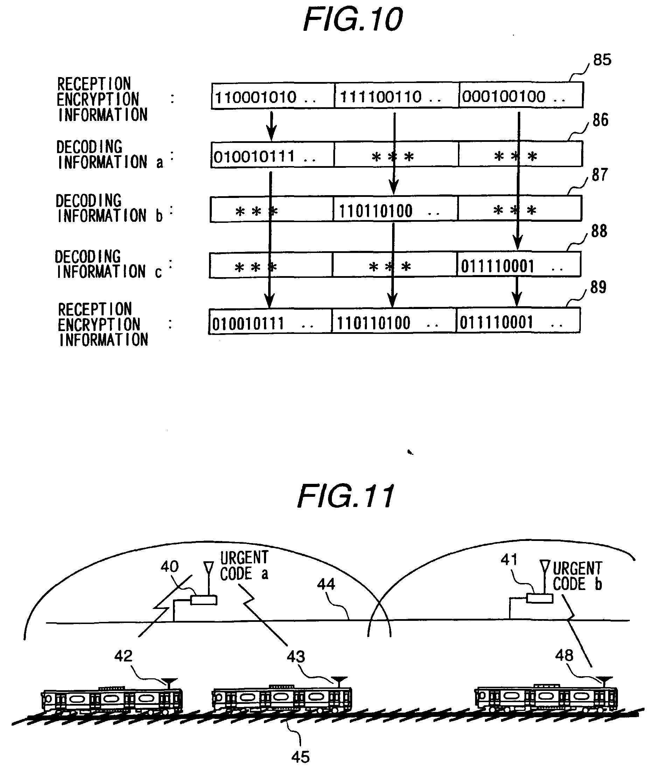

The reception encryption information 85 that is the output of decoding part 18 is input into the decryption decoding part 19, however in the decryption decoding part 19, according to the output of the decoding signaling key synchronization part 25, a decoding machine a80 with a decoding key 0 decided with the transmitting side, a decoding key 1 with the decoding machine b81, and a decoding machine c82 with the decoding key 2 are respectively operated to decode. That is to say, a reception encryption information 85 outputs a bit stream decoding information a86 which is the output of the decoding machine a80, a bit stream decoding information b87 which is the output of the decoding machine b81, and a bit stream decoding information c88 which is the output of the decoding machine c72 as shown in figure 10. These outputs are signals composed only of parts of the plaintext to
be decorded and needs to stand in line surely. This processing standing in line is executed with a sort machine 83. That is to say, respective outputs are cut out partially so as to be stood in according to the sort key which is still decided between the transmission side and the reception side with the sort machine 83 like the encryption information of figure 10. The output of said sort machine 83 is output as the decoding plaintext information 89 by the train control processing part 3. Here, a case of three decording machine is shown, however it is not limitted to the cast of three decording machine in the present invention, it may be adapted itself to the number of the coding machine in the transmitting side.
In the same way as the transmitting side, it is equipped considering the suitable performance and cost. Further, the patterns 0,1 of each signal as shown in figure 8, are shown for description formally and are not patterns with any special denotation. Moreover asterisk (*) merely shows encryption information that is not used.

Moreover only a case that the partial encryption in figure 8 and figure 10 is punctuated in a sequential order, is shown, however there is not always such need to be punctuated, and one encryption system may be used in the plaintext discretely. These decisions are decided in the protocol signal
which mentioned above entirely.

In the decryption decoding part 19, one more important function as characteristic feature of the present invnetion is realized already. It is cryptanalysis of the emergency code. Here as the emergency code, for example, in order to urgently let the train stop, a command code that needs
to transmit a message in emergency to the train is used. An urgent code cryptanalysis key is necessary in order to decode it. Acquisition of key is performed by recognizing the urgency traffic cryptanalysis code sent from the base station 40 by the reception protocol management part 27 in the protocol signal shown in figure 5 and by registering said cryptanalysis code to the urgent code cryptanalysis key registration part 95. Using the registered key, the information received a message at the urgent code cryptanalysis part 96 is decoded. The urgent code cryptanalysis key is not given fixedly, but is set up in starting time of the train driving and processing time of the hand over as shown in figure 5 and figure 7, even if the usual operation control information communication
except it is monitored, the disturbance person cannot know it, there is not the opportunity that the urgent code leaks out to the disturbance person, and there is hardly settlement as that the disturbance signal is made.

Figure 11 shows a condition of the system in the urgent code communication. That is to say, the mobile station 42, 43 which is controlled under the base station 40, is set up to receive a message of the urgent code a, and the mobile station 41 which is controlled under the base station 40, is set up to receive a message of the urgent code b. The setting of these urgent codes are communicated to the train side from the base station side through the protocol signal, when stating the train driving and performing the hand over as shown in figure 5 and figure 7.

A block diagram representing one embodiment of the base station communication apparatus will be shown in figure 12 in the next. In this figure 12, the part being coded same as figure 1 shows to have the same construction as that in figure 1. The transmission part 100 and the receive section
102 of the base station side are respectively the same as the transmission part 1 and the receive section 2 of the mobile station shown in figure 1 generally, however contents of the function of the transmission protocol management part 101 and the reception protocol management part 103 are a little different respectively from the transmission protocol management part 13 and the reception protocol management part 27. As shown by figure 5 to figure 7, this is because the protocol signal for transmitting and receiving in the base station side is diffenrent from the protocol signal for
transmitting and receiving in the mobile station side. The difference of this protocol processing shows a difference of the functions between the transmission protocol management part 101 and the reception protocol management part 103, and the transmission protocol management part 13 and the reception protocol management part 27 shown in figure 1.

Moreover in the base station side, as the plural train may exist in the same area that said base station covers, multi-channel system needs to be supported, however multiplexing control itself is not explained in detail here. Multiplexing system can be realized with time division, frequency division, each multiplexing system of code dividing fully as widely known. Relating to a problem of the system configuration, because the base station apparatus needs to contact with the several train as stated above, a settlement request of initial communication, a hand over request and furthermore outgoing of the first trigger signal of the protocol signal for promoting an encryption system and determination of the key, should be started from the mobile station side because the base station control load reduces and the load balance is good.

According to the embodiment of the present invention described as above, spectrum diffusion communications technology is used effectively and communication condition and equipment abnormality can be judged more surely with high confidence, and the more appropriate control of the train
according to the communication condition can be realized easily and surely.

Furthermore, as the coding technology is used as a strong system according to a high preservation of the railroad communication, it is tough to the disturbance by an outsider and the radio communication train control system having a high confidence can be realized.

Because the system can be set up in dynamic the cryptanalysis of the urgent information or the registration deletion of the train, a stable train service can be realized with a high protection degree to the disturbance even if the radio communication is utilized.

Moreover the system is conposed considering the load balance as the whole system. The system has an effect to be able to be realized with a good cost performance.

Furthermore, the train service is realized keeping a high safe and protectiveness in spite of using wireless system, number of the equipment in the rail road side is reduced to realize it wiht a low cost. Furthermore the number of the equipment in the rail road side is reduced, and the maintenance cost becomes little too.

## Claims

1. A train control method to control operation of a train based on an information signal by which a radio base station is contacted with a radio mobile station carried by the train, said train control method comprising the steps of
performing a spectrum diffusion communication between said radio base station and said radio mobile station,
inputting a reception signal electric power in a radio band, a signal electric power after a back-diffusion processing which is synchronised with a spectrum diffusion pattern and a frame error pattern detected when said reception signal forms a frame at at least one of said radio base station
and said radio mobile station, and
judging which condition of radio communication normal, radio communication trouble, and radio equipment fault, it belongs to.

2. A train control method to control operation of a train as defined in claim 1, wherein
when it is judged to be radio equipment fault in said judgment, the train is controlled to stop urgently.

3. A train control method to control operation of a train by communicating an information signal between plurality of radio base stations which cover a certain comunication area and a radio mobile station carried by the train, said train control method comprising the steps of
preparing each of said radio base station and said radio mobile station with plural encipherment means about the
communication, and
executing a protocol communication to make the encryption system coincident between the radio mobile station and the radio base station when the radio mobile station which mounted to said train starts and a hand over is processed so as to exchange the radio mobile station to be communicated.

4. A train control method to control operation of a train as defined in claim 3, wherein
determining said encryption system to be used between the radio mobile station and the radio base station by the mobile radio station mounted on the train, and
generating first trigger signal of the protocol communication by the mobile radio station mounted on the train so as to make the encryption processing coincident between the radio mobile station and the radio base station.

5. A train control method to control operation of a train by communicating an information signal between plurality of radio base stations which cover a certain comunication erea and a radio mobile station carried by the train, and to communicate an emergency stopping information for the train
as an urgent code from the radio base station to the radio mobile station, said train control method comprising the steps of
communicating with a cryptanalysis code of said urgent code from said radio base station to said radio mobile station when the radio mobile station which mounted to said train
starts and a hand over is processed so as to exchange the radio mobile station to be communicated.

6. A train control method to control operation of a train based on an information signal by which a radio base station is contacted with a radio mobile station carried by the train, said train control method comprising the steps of
transmitting so as to add registration ID which is different every operation start registration, from the radio base station to said radio mobile station on operation start registration of the train,
transmitting said registration ID from said radio mobile station to said radio base station on operation end of the train, and
erasing said train from a controlled object of the certification train when registration ID in the operation start registration accorded
with registration ID in operation end about the train of the operation end.

7. A train control method to control operation of a train by communicating an information signal between plurality of radio base stations which cover a certain comunication earia and a radio mobile station carried by the train, said train control method comprising the steps of
communicating different registration ID every time from said radio base station to said radio mobile station
when the radio mobile station which mounted to said train starts and a hand over is processed so as to exchange the radio mobile station to be communicated,
transmitting a message at least one of given registration ID from said radio mobile station to said radio base station when finishing operation of the train, and
erasing said train from the controlled object of the certification train when said registration ID on the operation end is accorded with at least oneof the registration ID about the train finishing the operation thereof.

8. A radio train control system comprising a radio base station, a radio mobile station which is mounted on a train, and contact radio base station mentioned above, and a train control part which controls operation of train based on a signal which is received by said radio mobile station mounted on the train, wherein further comprising
a control part performing spectrum diffusion communication in the respective said radio base station and said radio mobile station, and
a judgment device to judge whether it is radio communication normal, radio communication trouble, or radio equipment fault, in at least one of said radio base station and said radio mobile station, by inputting a reception signal electric power in a radio band, a signal electric power after back-diffusion synchronized with spectrum diffusion pattern, and a frame error pattern detected when the reception signal is changed to a frame.

9. A radio train control system as defined by claim 8, wherein characterized in that
when said judgment device judges said radio equipment fault, said judgment device outputs a signal for a train emergency stopping to said train control part.
